(19) Europäisches Patentamt

European Patent Office

Office européen des brevets

(11) Publication number: **0 507 377 A1**

# EUROPEAN PATENT APPLICATION

(21) Application number: **92200745.5**

(22) Date of filing: **16.03.92**

(51) Int. Cl.⁵: **C08K 13/04**, C08L 67/06

(30) Priority: **01.04.91 US 678374**

(43) Date of publication of application:
**07.10.92 Bulletin 92/41**

(84) Designated Contracting States:
**DE FR GB**

(71) Applicant: **GENERAL MOTORS CORPORATION**
**General Motors Building 3044 West Grand**
**Boulevard**
**Detroit Michigan 48202(US)**

(72) Inventor: **Hamid, Ghavami Kia**
**46122 Houghton Drive**
**Shelby Twp, MI 48315(US)**

(74) Representative: **Haines, Arthur Donald et al**
**Patent Section 1st Floor Gideon House 28**
**Chapel Street**
**Luton, Bedfordshire LU1 2SE(GB)**

(54) **High filler content sheet-moulding compound compositions.**

(57) Sheet-moulding compound (SMC) compositions which have more than 30 parts of glass-fibres per hundred parts of SMC and more than 200 parts of calcium carbonate fillers per hundred parts of base resin, and that are capable of producing parts having superior flexural properties.

The present invention relates to compositions of sheet-moulding compound having high glass-fibre and high filler content and, more particularly, relates to compositions of sheet-moulding compound having more than 30 parts of glass-fibres per hundred parts of SMC as specified in the preamble of claim 1, for example as disclosed in SAE Publication No.780 355, 1978.

Glass-fibre reinforced plastics materials have been used widely in the automotive industry in recent years. These plastics materials include sheet-moulding compound, glass-fibre reinforced reaction-injection-mouldable materials and various other glass-fibre reinforced plastics materials. The advantages of light weight, high strength, rustproofing, and relatively low cost make these materials ideal for many automotive exterior body panel applications.

Of these materials, the sheet-moulding compound (SMC) material is of particular interest to the automotive industry because of its superior strength and capability of being used in structural applications. In some applications, the appearance or cosmetic surfaces properties of the SMC are as important as its structural load-carrying capability. For instance, a vehicle deck lid must have properties of high stiffness, high impact strength, low coefficient of linear thermal expansion (CLTE), and a smooth surface finish similar to that obtainable on a sheet metal. Frequently, the desired cosmetic properties of SMC can be achieved through the use of thermoplastic-based low-profile additives.

The behaviour of thermal expansion of sheet-moulding compounds has not been well-understood and the technology to effectively control the thermal expansion properties of SMC has not been well-developed. In most cases, the thermal expansion of SMC is either adequate so as not to be of any concern or is such that it is tolerated in some limited applications. Consequently, there has not been much effort made in understanding and controlling the CLTE of SMC materials used in exterior vehicle body panel applications.

The lack of knowledge in how to control the CLTE has hindered the usage of composites in certain applications where the CLTE is a critical requirement. One example is the production of two-piece SMC parts in which an inner panel is bonded to an outer panel for vehicular applications such as doors, hoods and deck lids. In a two-piece SMC part, the outer panel normally fulfills the aesthetic requirements and the inner panel provides the necessary structural support. In such a part, the inner panel and the outer panel are normally bonded together with adhesives. In order to avoid "bond-line readout" (i.e., visual evidence of a bond line between the panels) on the cosmetic side of the outer panel, the inner and outer panel must have an equivalent CLTE. Because of this restriction, the same type of SMC material is used for both panels.

A problem arises in that the materials produced for such applications are normally optimized for their cosmetic properties and not optimized for their physical strength. As a result, in a two-piece bonded SMC part, the mechanical properties of the inner panel are frequently not optimized for maximum strength of the panel. Attempts to increase the strength of the inner panels have not been successful because changing the material formulation in a direction of higher rigidity results in a different CLTE, and it causes problems in bond strength and in "bond-line readout".

An improved sheet-moulding compound composition according to the present invention is characterised by the features specified in the characterising portion of claim 1.

It is, therefore, an object of the present invention to provide SMC formulations having higher mechanical strength independently of the CLTE values thereof. It is another object of the present invention to provide SMC formulations having improved rigidity whilst keeping the CLTE values thereof substantially constant.

It is yet another object of the present invention to provide SMC compositions having no less than 30 parts of glass-fibres per hundred of SMC and no less than 200 parts of calcium carbonate fillers per hundred of base resin capable of producing panels with superior mechanical strength and controlled CLTE.

It is a further object of the present invention to provide SMC compositions having no less than 30 parts of glass-fibres per hundred of SMC, no less than 200 parts of calcium carbonate fillers per hundred of base resin, and no more than 10 parts of a thermoplastic low-profile additive per hundred of base resin, capable of producing panels having superior flexural modulus and controlled CLTE values.

The inventor has discovered that it is possible to control the rigidity of sheet-moulding compounds independently of the CLTE values thereof. For a constant amount of styrene monomer solvent and polyester resin, the CLTE of SMC moulded panels decreases as the amount of the glass-fibres, the filler, or the thermoplastic low-profile additive is increased. On the other hand, the rigidity of the moulded panels increases as the amount of the glass-fibres and the filler is increased. However, the rigidity will decrease as the amount of thermoplastic low-profile additive is increased. The present invention, therefore, provides SMC compositions with a unique combination of these three ingredients, i.e., glass-fibres, fillers, and the thermoplastic low-profile additive, which are capable of producing moulded panels having improved rigidity (or flexural modulus) without changing the CLTE values thereof.

It has been discovered that, by increasing the amount of the glass-fibres and the fillers, and decreasing the amount of the thermoplastic low-profile additive, SMC moulded panels having improved rigidity but constant CLTE values can be produced. In order to avoid "glass wet-out" problems (i.e., problems of adequately wetting the glass fibres and the filler with liquid resin) at such high levels of concentration of glass-fibres and fillers, an additional amount of neat styrene monomer solvent is added into the novel compositions to compensate for the solvent portion of the low-profile additive that is present in a conventional formulation.

The present invention is a unique technique which provides SMC compositions having improved rigidity or flexural modulus whilst holding the CLTE values thereof substantially constant. By using the present invention, SMC compositions having high glass-fibre content and high filler content can be formulated without the aforesaid "glass wet-out" problems.

It has been previously recognized in the SMC industry that "glass wet-out" on the SMC equipment is of the greatest importance. Typically, filler to base resin ratios are between 1.5:1 at 30 percent glass content and 0.5:1 at 50 percent glass content. No filler is recommended for higher glass content formulations. See article entitled "Structural SMC-Material, Process and Performance Review" by Owens-Corning Fiberglass Company, publication number 780355, 1978, Society of Automotive Engineers.

It should be recognized that by base resin is meant the combination of a polyester resin, a styrene monomer solvent, and a thermoplastic low-profile additive. Table I shows the ingredients used in the novel compositions of the invention. The polyester resin is a product of Freeman Chemical Company, U.S.A., STYPOL R.T.M. 40-3941 containing 65 percent solid in styrene. The thermoplastic low-profile additive is produced by Union Carbide U.S.A., which additive contains 48 percent solid thermoplastics material in styrene. One of the additives that has been used is a magnesium oxide thickener that was pre-dispersed in a polyester carrier resin to 40 percent weight ratio by the manufacturer of Plasticolor Inc., and was designated as PLASTIGEL R.T.M. 9033. The styrene monomer was grade AR and produced by Baker Chemicals, U.S.A. The glass-fibres were produced by Owens-Corning Fiberglass, U.S.A. and were 25 mm in length. The external mould release used in the present invention was FREKOTE R.T.M. produced by HYSOL Corporation, U.S.A.

In Table I, three SMC compositions formulated according to the present invention are shown, together with a control formulation. The control formulation is a SMC composition used to produce the outer panel in a deck lid application capable of producing a so-called "automotive class A" surface. An automotive class A surface is defined as a surface without defects, which is capable of being painted to form an exterior automotive body panel. It is seen that the base resin, composed of a polyester resin, a styrene monomer, and a thermoplastic low-profile additive, is made up of a total of 100 parts. The filler content of calcium carbonate is expressed in terms of parts per one hundred parts of the base resin. In other words, the filler to resin ratios for formulation 1, 2, and 3 are 2.21, 2.48, and 2.52, respectively. These high filler-to-resin ratios are achieved simultaneously with a high glass content of between 35 to 39 parts per one hundred parts of SMC. It should be noted that the glass-fibre content is expressed in terms of parts per hundred parts or a weight percent of the total SMC composition as a standard industry practice. It is not based on the total base resin present.

From Table I, it is clearly seen that the present invention provides SMC compositions of much higher filler content at a high glass content than that normally practiced in the industry. As a matter of fact, the aforementioned reference recommended a much lower filler to resin ratio of 1.5:1 at an even lower glass content of 30 percent. This is compared to the present invention which enables one to use SMC compositions having a filler-to-resin ratio of between 2.2 to 2.5:1 at a glass content between 35 to 39 percent.

The Formulations No.1, No.2, and No.3 in Table I were moulded into flat plaques with dimensions of 280 x 200 x 3 mm. The charge configuration in the mould was 200 x 125 mm, and was always placed in the mould centre. The moulding temperature was 150°C and the moulding pressure was 6.9 MPa. Using these plaques, samples with dimensions of 76 x 25 x 3 mm and 76 x 12 x 3 mm were prepared for CLTE measurements and mechanical tests, respectively. The CLTE measurements were carried out using a dilatometer (UNITHERM model 313) calibrated with aluminium reference specimens. The mechanical tests were conducted using a dynamic mechanical analyzer (DuPont 982 DMA). For each experiment, six samples were tested and the averages values are reported.

Table I

FORMULATIONS

| INGREDIENTS | Control Weight (g) | No.1 Weight (g) | No.2 Weight (g) | No.3 Weight (g) |
|---|---|---|---|---|
| Polyester resin (STYPOL™ 40-3941) | 52 | 59.4 | 59.4 | 60.1 |
| Styrene monomer (neat) | 8 | 35.7 | 35.7 | 39.9 |
| Low-profile additive (NEULON™ A) | 40 | 4.9 | 4.9 | 0 |
| Total base resin | 100 | 100 | 100 | 100 |
| Filler (CaCO$_3$) (parts per one hundred of the base resin) | 192 | 221 | 248 | 252 |

Additives (parts per one hundred of the base resin)

| | | | | |
|---|---|---|---|---|
| wetting agent (BYK W995) | 0 | 2.4 | 2.4 | 2.4 |
| Initiator (t-butylperbenzoate) | 1.4 | 1.4 | 1.4 | 1.4 |
| Inhibitor (p-benzoquinone | 0.01 | 0.01 | 0.01 | 0.01 |
| Mould release (zinc stearate) | 4.4 | 4.4 | 4.4 | 4.4 |
| Thickener (PLASTIGEL™ 9033) | 3.0 | 3.0 | 3.0 | 3.0 |
| Glass-fibres (OCF-433) (parts per one hundred of SMC) | 27 | 35 | 37 | 39 |

Since polyester resin and the thermoplastic low-profile additives are normally dissolved in styrene monomer, the individual ingredients have been separated in order to more clearly illustrate the formulations. This is shown in Table II. Note that in Table II, the three ingredients contained in the base resin, namely, the polyester resin, the styrene monomer, and the thermoplastic low-profile additive are all presented in a "neat" form. By "neat" is meant that the polyester resin and the thermoplastic low-profile additive are both presented in terms of solids only.

## Table II

FORMULATIONS

| INGREDIENTS | Control Weight (g) | No.1 Weight (g) | No.2 Weight (g) | No.3 Weight (g) |
|---|---|---|---|---|
| Polyester resin (neat) | 32.7 | 38.6 | 38.6 | 39.5 |
| Styrene monomer (neat) | 50.2 | 59.7 | 59.7 | 60.5 |
| Low profile (neat) | 17.1 | 2.1 | 2.1 | 0 |
| Total base resin | 100 | 100 | 100 | 100 |
| Filler (CaCO$_3$) (parts per one hundred of the base resin) | 192 | 221 | 248 | 252 |

Additives (parts per one hundred of the base resin)

| | | | | |
|---|---|---|---|---|
| wetting agent (BYK W995) | 0 | 2.4 | 2.4 | 2.4 |
| Initiator (t-butylperbenzoate) | 1.4 | 1.4 | 1.4 | 1.4 |
| Inhibitor (p-benzoquinone | 0.01 | 0.01 | 0.01 | 0.01 |
| Mould release (zinc stearate) | 4.4 | 4.4 | 4.4 | 4.4 |
| Thickener (PLASTIGEL$^{RM}$ 9033) | 3.0 | 3.0 | 3.0 | 3.0 |
| Glass-fibres (OCF-433) (parts per one hundred of SMC) | 27 | 35 | 37 | 39 |

Tables I and II show how the present invention can provide SMC compositions having improved rigidity whilst at the same time maintaining a substantially constant CLTE value. The physical testing data are presented in TABLE III. It is clearly shown, in Table III, that the SMC compositions formulated by the present invention have an average of 200 percent improvement in the flexural modulus, which is a direct indication of the rigidity of a moulded panel, whilst at the same time maintaining the CLTE values the same as the controlled sample. It is also shown that Formulation No.3 has a higher flexural modulus than Formulation No.2, whereas its CLTE value is the same as Formulation No.2.

Table III

| | FORMULATIONS | | | |
|---|---|---|---|---|
| | Control | No.1 | No.2 | No.3 |
| CLTE (20-120°C), $10^{-6}$/°C | 14±1 | 15±1 | 14±1 | 14±1 |
| FLEX MODULUS, $10^{+6}$ psi | 1.2±.05 | 2.2±.05 | 2.4±.05 | 2.6±.05 |

One other important feature of the present invention is the addition of more solvent, i.e., the styrene monomer into the SMC compositions. The utilization of additional styrene monomer, i.e., approximately 60 parts per one hundred parts of base resin compared to 50 parts per one hundred parts of base resin in the controlled sample, contributes to the elimination of any "glass wet-out" problems during the processing of the SMC compositions.

It has also been noted that changing the type or amount of thickening agent, inhibitor or initiator within acceptable range will not affect the desirable results. For instance, other thickening agents have been used, such as PLASTIGEL R.T.M. 9037, which is a magnesium hydroxide, and no change was observed in the resulting properties.

Therefore, the present invention provides SMC compositions capable of producing moulded panels having greatly improved rigidity or flexural modulus whilst maintaining the CLTE values thereof. By using the present invention, the mechanical properties of two-piece sheet moulding compound panels can be greatly improved by the optimization of the flexural modulus of the inner panel whilst keeping its CLTE value the same as that of the composition used of the outer panel so that no bonding problem or bond-line readout problem can occur.

**Claims**

1. An improved sheet-moulding compound composition of the type containing a base resin, a calcium carbonate filler, additives and no less than 30 parts of glass-fibres per hundred parts of sheet-moulding compound, suitable for producing compression-moulded panels therefrom, characterised in that the composition contains no less than 200 parts of calcium carbonate fillers per hundred parts of base resin, no more than 10 parts of a thermoplastic low-profile additive per hundred parts of base resin, and no less than 50 parts of styrene monomer solvent per hundred parts of base resin, said composition being capable of producing compression-moulded panels which have a superior rigidity and a controlled coefficient of linear thermal expansion.

2. An improved sheet-moulding compound composition according to claim 1, in which the composition contains at least 35 parts of polyester resin solids per hundred parts of base resin, and at least 55 parts of styrene monomer solvent per hundred parts of base resin.

3. An improved sheet-moulding compound composition according to claim 1, in which the composition contains between 30 to 50 parts of polyester resin solids per hundred parts of base resin, between 50 to 70 parts of styrene monomer solvent per hundred parts of base resin, between 0 to 10 parts of thermoplastic low-profile additive solids per hundred parts of base resin, between 200 to 280 parts of calcium carbonate fillers per hundred parts of base resin, and between 30 to 45 parts of glass-fibres per hundred parts of sheet-moulding compound.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 969 311 (H. KUBOTA) <br> * claim 1; example 4 * <br> --- | 1,3 | C08K13/04 <br> C08L67/06 |
| A | WORLD PATENTS INDEX LATEST <br> Derwent Publications Ltd., London, GB; <br> AN 87-040169 <br> & JP-A-61 296 058 (DAINIPPON INK CHEM KK) 26 December  1986 <br> * abstract * <br> --- | 1,2 | |
| A | EP-A-0 413 085 (FIRMA CARL FREUDENBERG) <br> * claim * <br> ----- | 1 | |
| | | | **TECHNICAL FIELDS SEARCHED (Int. Cl.5)** <br><br> C08K <br> C08F |

The present search report has been drawn up for all claims

| Place of search | Date of completion of the search | Examiner |
|---|---|---|
| THE HAGUE | 14 JULY 1992 | FUHR C.K.B. |

EPO FORM 1503 03.82 (P0401)